# EUROPÄISCHE PATENTSCHRIFT

(11) **EP 3 656 052 B1**
(45) Veröffentlichungstag und Bekanntmachung des Hinweises auf die Patenterteilung: **01.06.2022**
(21) Anmeldenummer: 18729672.8
(22) Anmeldetag: 07.06.2018
(51) Int. Cl.: H02P 25/22, H02P 23/00, H02P 27/08

(54) **ELEKTRISCHE MASCHINE**
ELECTRICAL MACHINE
MACHINE ÉLECTRIQUE

(30) Priorität: 21.07.2017 DE 102017212568
(43) Veröffentlichungstag der Anmeldung: 27.05.2020
(73) Patentinhaber: Robert Bosch GmbH, 70442 Stuttgart (DE)
(72) Erfinder: KURFISS, Jochen, 75417 Lomersheim (DE); VOLLMER, Ulrich, 73235 Weilheim (DE)
(86) Internationale Anmeldenummer: PCT/EP2018/065012
(87) Internationale Veröffentlichungsnummer: WO 2019/015858

(56) Entgegenhaltungen:
- WO-A2-2010/110483
- DE-A1-102005 043 576
- DE-A1-102009 028 081

## Beschreibung

### Stand der Technik

Die Erfindung betrifft eine elektrische Maschine, insbesondere Elektromotor und/oder Generator. Die elektrische Maschine weist einen Stator und einen Rotor auf. Die Maschine weist wenigstens zwei jeweils dieselbe Phasenzahl aufweisende Teilmaschinen auf. Die Teilmaschinen weisen jeweils einen Teil von Statorspulen des Stators auf und sind jeweils ausgebildet, unabhängig voneinander ein magnetisches Drehfeld zum Drehbewegen des Rotors zu erzeugen. Die Maschine weist für jede Teilmaschine eine Leistungsendstufe auf, wobei die Leistungsendstufen jeweils ausgebildet sind, die Teilmaschinen unabhängig voneinander zu bestromen. Die Maschine weist auch wenigstens eine oder nur eine Steuereinheit auf, welche mit den Leistungsendstufen verbunden und ausgebildet ist, ein PWM-Signal (PWM = Puls-Weiten-Modulation) zum Ansteuern der Leistungsendstufen zu erzeugen. Die Teilmaschinen weisen jeweils für jede Phase wenigstens eine, wenigstens zwei, wenigstens drei, oder nur eine Statorspule auf. Die Steuereinheit ist ausgebildet für die Teilmaschinen, ein PWM-Signal zu erzeugen, dass die PWM-Pulse für eine Teilmaschine jeweils zu einem Startzeitpunkt einer PWM-Periode beginnen.

Aus der DE 10 2005 043 576 A1 ist ein Verfahren zum Betrieb einer elektrischen Maschine bekannt, die zumindest zwei elektrisch getrennte Statorwicklungen aufweist, wobei die erste Statorwicklung über einen ersten Teilumrichter gespeist wird und die zweite Statorwicklung über einen zweiten Teilumrichter gespeist wird. Die Teilumrichter werden mittels versetzt getakteter Signale gesteuert. Eine elektrische Maschine mit einem Stator und einem Rotor, wobei die Maschine wenigstens zwei jeweils dieselbe Phasenanzahl aufweisende Teilmaschinen aufweist, wobei die Teilmaschinen jeweils einen Teil von Statorspulen des Stators umfassen und ausgebildet sind, unabhängig voneinander ein magnetisches Drehfeld zum Drehbewegen des Rotors zu erzeugen, wobei die Maschine für jede Teilmaschine eine Leistungsendstufe aufweist, und die Maschine wenigstens eine Steuereinheit aufweist, welche mit den Leistungsendstufen verbunden ist, und welche ausgebildet ist, ein PWM-Signal zum Ansteuern der Leistungsendstufen zu erzeugen, ist beispielsweise jeweils in den Offenlegungsschriften DE 102005043576 A1, WO 2010/110483 A2 und DE 102009028081 A1 offenbart.

### Offenbarung der Erfindung

Erfindungsgemäß ist die Steuereinheit ausgebildet, das PWM-Signal für die Teilmaschinen derart zu erzeugen, dass die PWM-Pulse für eine Teilmaschine jeweils zu einem Startzeitpunkt einer PWM-Periode beginnen und die PWM-Pulse für eine weitere Teilmaschine derart zu erzeugen, dass die PWM-Pulse jeweils zu einem Endzeitpunkt der PWM-Periode für die weitere Teilmaschine enden. Durch die so ausgebildete Steuereinheit können die PWM-Pulse für eine der Teilmaschinen jeweils insbesondere linksbündig, gemeinsam zu Beginn der PWM-Periode beginnend erzeugt werden, wobei die PWM-Pulse für die weitere Teilmaschine jeweils insbesondere rechtsbündig, gemeinsam zum Ende der PWM-Periode endend erzeugt werden können.

Vorteilhaft ist so ein schaltpulsfreies Zeitintervall gebildet, bei dem kein Einschalten oder Ausschalten eines von der Leistungsendstufe auf eine Statorspule einer Teilmaschine geschalteten Phasenstroms erfolgt. Es wurde nämlich erkannt, dass das Ein- oder Ausschalten des Statorspulenstromes EMV-Störungen verursacht, die eine Stromerfassung des Statorspulenstromes beeinträchtigen können oder unmöglich machen.

In einer anderen Variante ist die Steuereinheit ausgebildet, das PWM-Signal für die Teilmaschinen derart zu erzeugen, dass die PWM-Pulse für eine Teilmaschine jeweils zu einem Startzeitpunkt einer PWM-Periode beginnen oder enden, und die PWM-Pulse für eine weitere Teilmaschine mittenzentriert zu erzeugen. Dabei können vorteilhaft für einen Aussteuerungsbereich schaltpulsfreie Zeitfenster zur Stromerfassung erzeugt werden.

In einer anderen bevorzugten Variante ist die Steuereinheit ausgebildet, das PWM-Signal für die Teilmaschinen derart zu erzeugen, dass die PWM-Pulse für wenigstens zwei oder alle Teilmaschinen jeweils zu einem Startzeitpunkt einer PWM-Periode beginnen oder enden. Dadurch kann durch die so gebildete PWM-Ansteuerung der Leistungsendstufen vorteilhaft ein Zeitintervall zur Stromerfassung über einen großen Aussteuerungsbereich der Maschine gebildet sein.

In einer bevorzugten Ausführungsform weist die Steuereinheit einen Pulsweitenmodulator auf, welcher ausgebildet ist, ein Tastverhältnis für wenigstens eine oder eine Mehrzahl von PWM-Perioden zu ändern, und so eine Aussteuerung der Maschine, insbesondere der Teilmaschinen, zu ändern. Der PWM-Modulator ist bevorzugt ausgebildet, die pulsweitenmodulierten Pulse für eine Teilmaschine gemeinsam beginnend, insbesondere linksbündig, oder gemeinsam endend, insbesondere rechtsbündig bezogen auf die PWM-Periode zu erzeugen.

Die Steuereinheit weist bevorzugt eine Verarbeitungseinheit auf, welche durch einen einen Mikroprozessor, einen Mikrocontroller oder ein FPGA (FPGA = Field-Programable-Gate-Array) gebildet ist. Die Steuereinheit weist bevorzugt wenigstens einen Treiber für die Leistungsendstufen auf, welcher ausgangsseitig mit Steueranschlüssen den Leistungsendstufen verbunden und ausgebildet ist, in Abhängigkeit des PWM-Signals ein Steuersignal zum Einschalten oder Abschalten der Halbleiterschalter der Leistungsendstufen zu erzeugen und an die Leitungsendstufen zu senden.

In einer bevorzugten Ausführungsform weist die Maschine wenigstens einen mit der Steuereinheit verbundenen Stromsensor auf, wobei der Stromsensor ausgebildet ist, den Phasenstrom wenigstens einer Phase oder aller Phasen der Teilmaschine zu erfassen. Die Steuereinheit ist ausgebildet, den Phasenstrom wenigstens einer Phase der Teilmaschine während einer gemeinsamen Pulspause der PWM-Perioden der Teilmaschinen zu erfassen. Vorteilhaft ist ein Zeitfenster, insbesondere ein Zeitintervall während einer PWM-Periode, während dem keine Schaltvorgänge eines Schaltens der Leistungsendstufe, bewirkt durch einen PWM-Puls, insbesondere einen Beginn oder ein Ende eines PWM-Pulses, erfolgt, bei der vorgenannten linksbündigen Ansteuerung der Teilmaschine, und einer rechtsbündigen Ansteuerung einer dazu verschiedenen, weiteren Teilmaschine der Teilmaschinen, innerhalb eines größeren Aussteuerungsbereiches gebildet, im Vergleich zu einer mittenzentrierten Ansteuerung einer Teilmaschine.

In einer bevorzugten Ausführungsform ist die Steuereinheit ausgebildet, die PWM-Perioden für zueinander verschiedene Teilmaschinen zueinander phasenversetzt zu erzeugen. Der Phasenversatz, auch Phasenverschiebung genannt, zwischen der Ansteuerung der Teilmaschine und der Ansteuerung der weiteren Teilmaschine beträgt bevorzugt zwischen 30 und 70 Prozent einer PWM-Periodendauer, weiter bevorzugt zwischen 34 und 66 Prozent einer PWM-Periodendauer, und besonders bevorzugt 50 Prozent einer PWM-Periodendauer. Durch die so ausgebildete Steuereinheit ergibt sich für wenigstens einen Teil eines Aussteuerungsbereiches der Teilmaschinen eine Entlastung eines insbesondere gemeinsam von den Teilmaschinen genutzten elektrischen Zwischenkreises, wobei der Zwischenkreis einen Zwischenkreiskondensator umfasst. Durch die zeitlich versetzte Ansteuerung der Teilmaschinen kann vorteilhaft, eine Spannungsschwankung eines Bordnetzes, verursacht durch einen Ripplestrom im Zwischenkreis, reduziert werden. Weiter vorteilhaft ist durch den Phasenversatz, insbesondere in Verbindung mit der linksbündigen und rechtsbündigen Ansteuerung zueinander verschiedener Teilmaschinen ein Zeitfenster für eine Strommessung über einen weiten Aussteuerungsbereich schaltpulsfrei ausgebildet. Die Strommessung eines Phasenstromes kann so durch die Schaltpulse zum Schalten der Halbleiterschalter der Leistungsendstufen elektromagnetisch nicht gestört werden. Vorteilhaft kann durch eine Strommessung in einem Zeitintervall, zuvor auch Zeitfenster genannt, in dem keine Schaltvorgänge an der Leistungsendstufe stattfinden, ein Strommess-Widerstand besonders klein, und so besonders verlustarm, ausgebildet sein. Eine an dem Strommess-Widerstand abfallende Messspannung, welche den erfassten Strom repräsentiert, kann so sehr klein ausgebildet sein, und - beispielsweise mittels eines Messverstärkers - zur Auswertung durch die Steuereinheit verstärkt, und so vergrößert werden.

In einer bevorzugten Ausführungsform ist die Steuereinheit ausgebildet, das Tastverhältnis für alle Phasen einer Teilmaschine um ein vorbestimmtes Zeitintervall zu verlängern oder zu verkürzen. Auf diese Weise kann auf eine Ansteuerung einer Teilmaschine ein Spannungs-Offset aufaddiert oder subtrahiert werden, welcher auf die Ansteuerung der Teilmaschine elektrisch keinen Einfluss hat. Der Spannungs-Offset bewirkt jedoch vorteilhaft, dass das Zeitfenster zur schaltpulsfreien Stromerfassung auch für große Aussteuerungswerte entsprechend groß ausgebildet ist.

In einer bevorzugten Ausführungsform ist die Steuereinheit ausgebildet, eine Pulsdauer eines High-Side-Pulses und eines Low-Side-Pulses zueinander abwechselnd zu verlängern oder zu verkürzen. Auf diese Weise kann die Leistungsendstufe beim Erzeugen des Spannungs-Offsets thermisch entlastet werden.

Die Leistungsendstufe umfasst bevorzugt für jede Phase wenigstens eine Halbleiterschalter-Halbbrücke. Die Halbleiterschalter-Halbbrücke umfasst einen Low-Side-Halbleiterschalter und einen High-Side-Halbleiterschalter, die miteinander in Serie verbunden sind. Vorteilhaft können die High-Side- und die Low-Side-Halbleiterschalter der Leistungsendstufe, insbesondere von Halbleiterschalter-Halbbrücken der Leistungsendstufe, so einander abwechselnd thermisch belastet werden.

In einer bevorzugten Ausführungsform ist die Steuereinheit ausgebildet, einen Stromerfassungsintervall zu erzeugen und den Strom während des Stromerfassungsintervalls zu erfassen. Die Steuereinheit ist weiter bevorzugt ausgebildet, das Stromerfassungsintervall während der Dauer einer gemeinsamen Pulspause der Ansteuerung der Teilmaschinen zu erzeugen.

Die Erfindung kann auch in einem Steuergerät für eine elektrische Maschine genutzt werden. Die Steuereinheit umfasst die bereits beschriebene Steuereinheit, welche ausgangsseitig mit den Leistungsendstufen verbunden ist. Die Leistungsendstufe ist ausgebildet, mit einer Teilmaschine, gebildet aus einem Teil der Statorspulen des Stators, verbunden zu werden und weist dazu einen Ausgangsanschluss zum Verbinden mit dem Stator auf.

Die Erfindung betrifft auch ein Verfahren zum Ansteuern einer elektrischen Maschine. Die Maschine weist wenigstens zwei Teilmaschinen auf. Die Teilmaschinen weisen jeweils eine gleiche Anzahl von Statorspulen eines Stators der Maschine auf. Bei dem Verfahren werden zum Ansteuern der Statorspulen pulsweitenmodulierte Pulsmuster umfassend eine Mehrzahl von PWM-pulsen erzeugt, wobei die PWM-Pulse für eine Teilmaschine jeweils zu einem Startzeitpunkt einer PWM-Periode beginnen und die PWM-Pulse für eine weitere Teilmaschine jeweils zu einem Endzeitpunkt der PWM-Periode für die weitere Teilmaschine enden.

Dadurch kann ein Zeitfenster zur schaltpulsfreien Stromerfassung bei der Maschine vorteilhaft groß ausgebildet sein.

Bevorzugt wird bei dem Verfahren ein durch wenigstens eine der Statorspulen fließender Strom während einer gemeinsamen Pulspause der Pulse für die Teilmaschinen Strom innerhalb eines Stromerfassungsintervalls erfasst. Vorteilhaft kann ein Strommessfenster, gebildet durch ein Zeitintervall, das frei von Schaltvorgängen der Leistungsendstufe ausgebildet ist, größer sein als bei einer mittenzentrierten PWM-Ansteuerung.

Bevorzugt sind bei dem Verfahren die PWM-Perioden der Teilmaschine und der weiteren Teilmaschine jeweils zueinander phasenversetzt. Ein Phasenversatz beträgt bevorzugt zwischen 37 und 66 Prozent einer Periodendauer, weiter bevorzugt die Hälfte der PWM-Periodendauer. Vorteilhaft kann so, bevorzugt in Verbindung mit der vorab beschriebenen linksbündigen oder rechtsbündigen PWM-Erzeugung eine Zwischenkreisentlastung gebildet sein.

Bevorzugt weisen die PWM-Perioden aller Teilmaschinen jeweils die gleiche Periodendauer auf. Dadurch kann eine Ansteuerung der Teilmaschinen zeitsynchron zueinander erfolgen..

Die Erfindung wird nun im Folgenden anhand von Figuren und weiteren Ausführungsbeispielen beschrieben. Weitere vorteilhafte Ausführungsformen ergeben sich aus den in den Figuren und in den abhängigen Ansprüchen beschriebenen Merkmalen.

Figur 1 zeigt ein Ausführungsbeispiel für eine elektrische Maschine mit einem Inverter, wobei der Inverter eine Steuereinheit aufweist, welche ausgebildet ist, PWM-Pulse für eine Teilmaschine derart zu erzeugen, dass Halbleiterschalter-Halbbrücken des Inverters zu einem gemeinsamen Startzeitpunkt gemeinsam angeschaltet oder zu einem gemeinsamen Endzeitpunkt abgeschaltet werden können;
Figur 2 zeigt ein Diagramm mit PWM-Mustern, die von der in Figur 1 gezeigten Steuereinheit erzeugt worden sind.

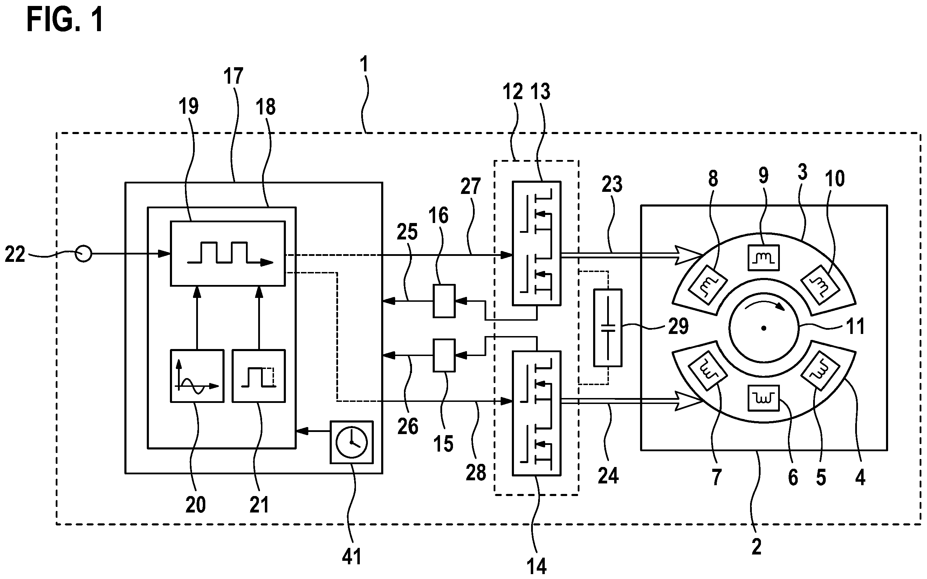

Figur 1 zeigt - schematisch - ein Ausführungsbeispiel für eine elektrische Maschine 1. Die elektrische Maschine 1 weist einen Stator 2 auf. Der Stator 2 umfasst in diesem Ausführungsbeispiel zwei Teilmaschinen, welche jeweils dreiphasig ausgebildet sind, und dazu jeweils drei Statorspulen aufweisen. Eine Teilmaschine 3 umfasst in diesem Ausführungsbeispiel die Statorspulen 8, 9 und 10. Eine weitere Teilmaschine 4 der Teilmaschinen weist die Statorspulen 5, 6 und 7 auf. Die Maschine 1 umfasst auch einen Rotor 11, welcher beispielsweise permanentmagnetisch, oder fremderregt ausgebildet ist. Die Maschine 1 weist auch eine Endstufe 12 auf, welche in diesem Ausführungsbeispiel aus zwei Teilendstufen 13 und 14 gebildet ist. Jede der Teilendstufen 13 und 14 weist jeweils eine B6-Brücke auf, wobei die B6-Brücke drei Halbleiterschalter-Halbbrücken umfasst. Die Halbleiterschalter-Halbbrücke umfasst einen Low-Side-Halbleiterschalter und einen High-Side-Halbleiterschalter. Eine Halbleiterschalter-Halbbrücke ist dazu ausgebildet einen Phasenstrom für eine Phase der Teilmaschine zu erzeugen. Die Teilendstufe 13 ist ausgangsseitig über eine elektrische Verbindung 23 mit der Teilmaschine 3 verbunden. Die Teilendstufe 14 ist ausgangsseitig über eine elektrische Verbindung 24 mit der Teilmaschine 4 verbunden. Die Teilendstufe 13 ist ausgebildet, die Statorspulen 8, 9 und 10 der Teilmaschine 3 zum Erzeugen eines magnetischen Drehfeldes zum Drehbewegen des Rotors 11 zu bestromen. Die Teilendstufe 14 ist ausgebildet, die Statorspulen 5, 6 und 7 der Teilmaschine 4 zum Erzeugen eines magnetischen Drehfeldes zum Drehbewegen des Rotors 11 zu bestromen. Die Teilendstufen 13 und 14 können gemeinsam mit den jeweiligen Teilmaschinen 3 beziehungsweise 4 den Rotor 11 unabhängig voneinander zum Drehbewegen anregen. Auf diese Weise weist die Maschine 1 zwei voneinander unabhängige Teilmaschinen auf, welche im Normalbetrieb den Rotor 11 gemeinsam bewegen können, oder im Falle eines Defekts einer Teilmaschine kann die noch verbleibende Teilmaschine den Rotor 11 weiterbewegen.

Die Maschine 1 weist auch eine Steuereinheit 17 auf. Die Steuereinheit 17 ist ausgangsseitig über eine Verbindungsleitung 27 mit der Endstufe 12, und dort mit der Teilendstufe 13, verbunden und ist ausgebildet, die Teilmaschine 13 über die Verbindungsleitung 27 anzusteuern, und dazu ein Steuersignal, insbesondere ein Pulsmuster, zu erzeugen und dieses an die Teilendstufe 13 zu senden. Die Steuereinheit 17 ist ausgangsseitig über eine Verbindungsleitung 28 mit der Teilendstufe 14 verbunden und ist ausgebildet, die Teilendstufe 14, insbesondere Steueranschlüsse der Teilendstufe 14, zum Bestromen der Teilmaschine 4 anzusteuern. Die Maschine 1 weist auch einen Stromsensor 16 zum Erfassen eines Stromes der Teilendstufe 13, und einen Stromsensor 15 zum Erfassen eines Stromes der Teilendstufe 14 auf. Die Stromsensoren 15 und 16 sind beispielsweise durch einen Shunt-Widerstand gebildet. Die Teilendstufen 13 und 14 können - anders als in Figur 1 dargestellt - auch mittels eines gemeinsamen Stromsensors verbunden sein. Dazu können die Teilendstufen 13 und 14 jeweils für jede Phase, und so für jede Halbleiterschalter-Halbbrücke einen Stromerfassungswiderstand aufweisen.

Die Steuereinheit 17 ist in diesem Ausführungsbeispiel ausgebildet, die Teilmaschinen 3 und 4 zueinander phasenversetzt anzusteuern. Ein Phasenversatz beträgt beispielsweise zwischen 33 und 67 Prozent einer PWM-Periodendauer. So kann ein von den Teilendstufen 13 und 14 gemeinsam genutzter Zwischenkreiskondensator 29 entlastet werden. Der Stromsensor 16 ist ausgangsseitig über eine Verbindungsleitung 25 mit der Steuereinheit 17 verbunden. Der Stromsensor 15 ist ausgangsseitig über eine Verbindungsleitung 26 mit der Steuereinheit 17 verbunden. Die Stromsensoren 16 und 15 sind jeweils ausgebildet, einen in der jeweiligen Teilendstufe 13 beziehungsweise 14 fließenden Strom zu erfassen und ein den Strom repräsentierendes Stromsignal zu erzeugen und ausgangsseitig an die Steuereinheit 17 zu senden.

Die Steuereinheit 17 weist einen Pulsmustergenerator 18 auf. Der Pulsmustergenerator 18 ist ausgebildet, pulsweitenmodulierte Steuersignale zum Ansteuern der Leistungsendstufe 12, insbesondere Steueranschlüsse der Leistungsendstufe 12, zu erzeugen und diese ausgangsseitig auszugeben. Dazu weist der Pulsmustergenerator 18 einen Pulsweitenmodulator 19 auf. Der Pulsweitenmodulator 19 weist einen Eingang 22 auf und ist ausgebildet, in Abhängigkeit eines am Eingang 22 empfangenen Steuersignals, insbesondere Amplitudensignals, ein Tastverhältnis zwischen einer PWM-Pulsdauer und einer Pulspausendauer zu erzeugen und die Steuerpulse zum Ein- und Ausschalten der Halbleiterschalter der Leistungsendstufe 12 entsprechend dem Tastverhältnis zu erzeugen.

Der Pulsweitenmodulator 19 ist eingangsseitig mit einem Ansteuermustergenerator 20 verbunden. Der Ansteuermustergenerator ist in diesem Ausführungsbeispiel ausgebildet, für jede Phase, und so für jede der Phase entsprechenden Statorspule der Teilmaschinen ein Ansteuersignal zu erzeugen. Das Ansteuersignal repräsentiert beispielsweise eine Sinuswellenform oder zusätzlich dazu eine zu der Sinuswellenform - als Grundschwingung - entsprechende dritte Oberwelle.

Die Steuereinheit 17 ist ausgebildet, das von den Stromsensoren 15 und 16 erzeugte Stromsignal wenigstens zu einem Stromerfassungszeitpunkt, oder innerhalb eines Stromerfassungsintervalls, zu erfassen, welches im zeitlichen Bereich oder zum Zeitpunkt einer Hälfte der Steuerpulsdauer eines Steuerpulses liegt. Die Steuereinheit 17 kann so den in der Leistungsendstufe, insbesondere in den Teilendstufen 13 und 14, fließenden Strom - insbesondere zum Zeitpunkt einer Pulsmitte der von dem PWM-Modulator erzeugten Steuerpulse - erfassen. Der PWM-Modulator 19 ist beispielsweise ausgebildet, die Steuerpulse gemeinsam beginnend oder gemeinsam endend innerhalb einer Pulsperiode zu erzeugen. Die Stromerfassung erfolgt beispielsweise während einer Pulspause einer PWM-Periode. Die Steuereinheit 17, insbesondere der Ansteuermustergenerator 20, ist ausgebildet, die Teilmaschinen 3 und 4 zueinander phasenversetzt anzusteuern. Dazu ist der PWM-Modulator 19 beispielsweise ausgebildet, die Steuerpulse für zueinander verschiedene Teilmaschinen zueinander phasenversetzt zu erzeugen. Ein Phasenversatz zwischen den Pulsmustern für die Teilmaschinen 3 und 4 beträgt beispielsweise die Hälfte einer Pulsperiodendauer.

Die Steuereinheit 17 ist ausgebildet, die PWM-Pulse für die Teilmaschine 3 gemeinsam zu beginnen und die PWM-Pulse für die weitere Teilmaschine 4 gemeinsam zu beenden. Ein Beginn eines PWM-Pulses entspricht einem Einschalten der Halbbrücke einer Leistungsendstufe und so einem Verbinden einer Statorspule mit dem Zwischenkreispotential für die mit der Leistungsendstufe verbundene Statorspule, und ein Ende eines PWM-Pulses entspricht einem Ausschalten der Halbbrücke und so einem Verbinden einer Statorspule mit dem Zwischenkreismassepotential .

Die Steuereinheit 17 ist in diesem Ausführungsbeispiel ausgebildet, in Abhängigkeit eines Aussteuergrades der PWM-Ansteuerung die Steuerpulsdauer der Steuerpulse für die Teilmaschine wenigstens für die Dauer der Stromerfassung oder dauerhaft wenigstens für einen Periodentakt oder mehrere Periodentakte zu verändern, insbesondere zu verlängern oder zu verkürzen, und so einen Spannungsoffset mittels des PWM-Musters für die Teilmaschine zu erzeugen. Dadurch kann ein Zeitintervall zur Strommessung in einem Aussteuerungsbereich zusätzlich vergrößert werden.

Die Steuereinheit 17, in diesem Ausführungsbeispiel der Pulsmustergenerator 18, weist dazu eine Addiereinheit 21 auf, welche ausgebildet ist, in Abhängigkeit eines Zusammentreffens einer Schaltflanke innerhalb des Stromerfassungsintervalls, die Steuerpulsdauer der Steuerpulse für die Teilmaschine zu vergrößern und dazu einen verlängerten Steuerpuls derart zu erzeugen, dass die Schaltflanke außerhalb des Stromerfassungsintervalls liegt. Der Pulsmustergenerator 18 ist eingangsseitig mit einem Zeitgeber 41 verbunden und ausgebildet, einen von dem Zeitgeber 41 erzeugten, einen Zeittakt repräsentierenden Zeittaktsignals zu empfangen, und das PWM-Signal in Abhängigkeit des Zeittaktsignals zu erzeugen. Der Zeitgeber 41 ist beispielsweise durch einen Schwingquarz gebildet.

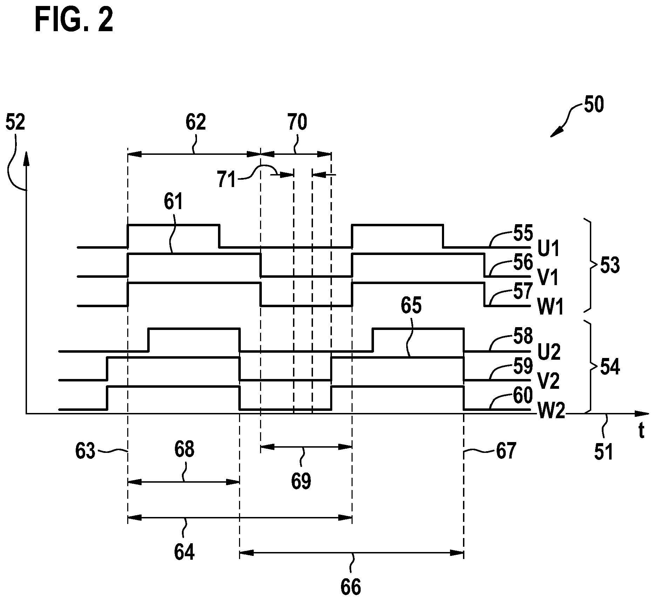

Figur 2 zeigt ein Diagramm, in welchem die von dem in Figur 1 dargestellten PWM-Modulator 19 für die Teilmaschine 3 und die Teilmaschine 4 erzeugten PWM-Ansteuersignale dargestellt sind. Das Diagramm 50 weist eine Zeitachse 51 und eine Amplitudenachse 52 auf. Auf der Amplitudenachse 52 ist eine Amplitude der PWM-Pulse, erzeugt von dem Pulsweitenmodulator 19, aufgetragen. Das Diagramm 50 zeigt ein PWM-Ansteuermuster 53 für die Teilmaschine 3, welche aus den Statorspulen 8, 9 und 10 des Stators 2 gebildet ist, und ein PWM-Ansteuermuster 54 für die Teilmaschine 4, welche aus den Statorspulen 5, 6 und 7 des Stators 2 gebildet ist. Das Ansteuermuster 53 umfasst ein eine PWM-Pulsfolge repräsentierendes PWM-Signal 55 zum Ansteuern der Leistungsendstufe 13, und so zum Bestromen der Statorspule 8, ein eine PWM-Pulsfolge repräsentierendes PWM-Signal 56 zum Bestromen der Statorspule 9 und ein eine PWM-Pulsfolge repräsentierendes PWM-Signal 57 zum Bestromen der Statorspule 10. Das PWM-Ansteuermuster 54 umfasst ein eine PWM-Pulsfolge repräsentierendes PWM-Signal 58 zum Ansteuern der Leistungsendstufe 14, und so zum Bestromen der Statorspule 5, ein eine PWM-Pulsfolge repräsentierendes PWM-Signal 59 zum Bestromen der Statorspule 6 und ein eine PWM-Pulsfolge repräsentierendes PWM-Signal 60 zum Bestromen der Statorspule 7.

Die PWM-Signale umfassen jeweils zeitlich aufeinanderfolgende PWM-Pulse, von denen ein PWM-Puls 61 der PWM-Pulsfolge 56 beispielhaft bezeichnet ist. Der PWM-Puls 61 weist eine Pulsdauer 62 auf und beginnt zu einem Startzeitpunkt 63 einer PWM-Periode, die eine PWM-Periodendauer 64 aufweist. An den PWM-Puls 61 schließt eine Pulspause 69 an, die zum Ende der PWM-Periodendauer endet. Zum Startzeitpunkt wird die dem PWM-Puls 61 entsprechende, in Figur 1 dargestellte Statorspule 9 bestromt, und zum Ende des PWM-Pulses 61 wird der Strom abgeschaltet.

Der Pulsweitenmodulator 19 in Figur 1 ist ausgebildet, die PWM-Pulsfolgen 58, 59 und 60 für die Teilmaschine 4 synchron zueinander mit einer Pulsperiodendauer 66 zu erzeugen. Ein PWM-Puls 65 der PWM-Pulsfolge 59 für die Statorspule 9 der Teilmaschine 4 ist beispielhaft bezeichnet. Die PWM-Pulse des PWM-Ansteuermusters 54, insbesondere der PWM-Pulsfolgen 58, 59 und 60, enden jeweils gemeinsam zu einem Endzeitpunkt 67 der PWM-Periode 66.

Die PWM-Periode 64 des PWM-Ansteuermusters 53 für die Teilmaschine 3 und die PWM-Periode 66 der PWM-Ansteuermuster 54 für die Teilmaschine 4 sind zueinander phasenversetzt. Der PWM-Modulator 19 in Figur 1 ist ausgebildet, die PWM-Pulse für die zueinander verschiedenen Teilmaschinen 3 und 4 unabhängig voneinander und zueinander phasenverschoben mit einem Phasenversatz zu erzeugen. Der Phasenversatz 68 zwischen den Ansteuermustern 53 und 54 beträgt in diesem Ausführungsbeispiel 50 Prozent der PWM-Periodendauer. Die PWM-Periodendauern der PWM-Perioden 64 und 65 sind in diesem Ausführungsbeispiel gleich lang ausgebildet.

Bei dem in Figur 2 im Diagramm 50 gezeigten Aussteuerungsgrad der Teilmaschinen 3 und 4, repräsentiert durch die PWM-Ansteuermuster 53 und 54, verbleibt ein von Schaltpulsen frei ausgebildetes Zeitintervall 70, in welchem eine Stromerfassung durch den in Figur 1 dargestellten Stromsensor 16 oder den Stromsensor 15 störungsfrei von Schaltpulsen, verursacht durch ein Ein- oder Ausschalten eines Halbleiterschalters der Leistungsendstufen 13 oder 14, erfolgen kann. Das Zeitintervall 70 ist durch die linksbündig zum Startzeitpunkt 63 der PWM-Periode 64 gemeinsam beginnenden PWM-Pulse des PWM-Ansteuermusters 53, und durch die - insbesondere rechtsbündig - gemeinsam zum Ausschaltzeitpunkt 67, zuvor auch Endzeitpunkt genannt, gemeinsam zum Ende der PWM-Periode 66 endenden PWM-Pulse des PWM-Ansteuermusters 54, besonders groß ausgebildet.

Das Diagramm 50 zeigt auch ein Stromerfassungsintervall 71, in welchem durch die in Figur 1 dargestellte Steuereinheit 17 mittels der Stromsensoren 15 und 16 - in diesem Ausführungsbeispiel gleichzeitig - die Phasenströme der Teilmaschinen 3 und 4 erfasst werden können. Das Stromerfassungsintervall 71 ist beispielsweise durch ein Abtasten, insbesondere Analog-Digital-Wandeln eines zeitlichen Stromverlaufes, und ein Ermitteln eines im Stromerfassungsintervall 71 an der entsprechenden Leistungsendstufe mittleren Stromwertes bestimmt.

Durch den Phasenversatz 68 kann der in Figur 1 dargestellte Zwischenkreiskondensator 23 vorteilhaft entlastet werden. Weiter vorteilhaft kann durch den Phasenversatz 68 in Verbindung mit den gemeinsam zum Startzeitpunkt 63 der Pulsperiode 64 beginnenden PWM-Pulsen des PWM-Ansteuermusters 53, und den zum Endzeitpunkt 67 der PWM-Periode 65 endenden PWM-Pulse des PWM-Ansteuermusters 54 für die weitere Teilmaschine das Zeitintervall 70, das ein Zeitfenster zur störungsfreien, insbesondere schaltpulsfreien, Stromerfassung repräsentiert, besonders groß ausgebildet sein.

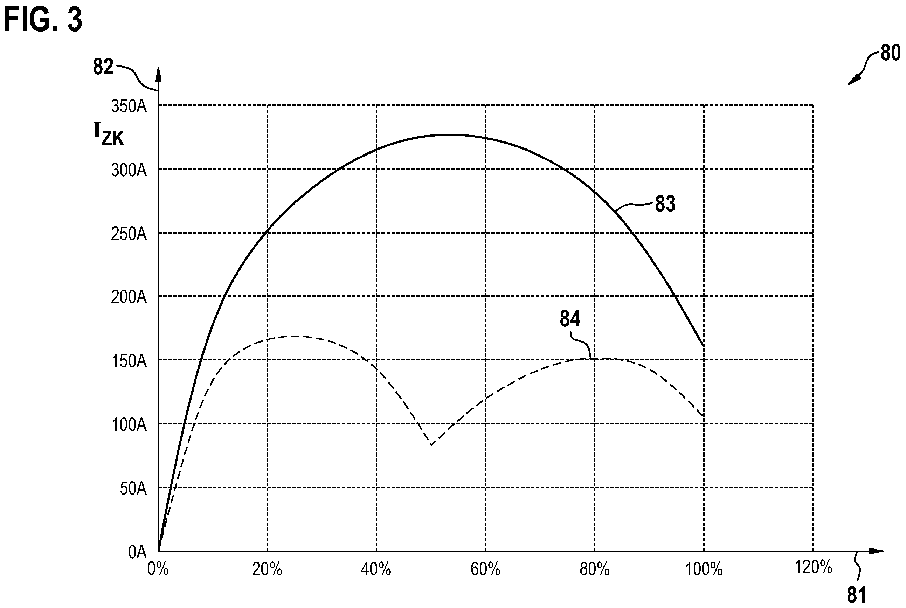

Figur 3 zeigt ein Diagramm 80. Das Diagramm 80 weist eine Abszisse 81 auf, die einen Aussteuerungsgrad der in Figur 1 dargestellten Maschine 1 repräsentiert. Eine Ordinate 82 des Diagramms 80 repräsentiert einen mittleren Ripplestrom im Zwischenkreis, der eine Stromschwankung im Zwischenkreis repräsentiert. Eine Kurve 83 repräsentiert einen Ripplestrom in Abhängigkeit des Aussteuerungsgrades einer Maschine mit zwei Teilmaschinen, die jeweils mittenzentriert und ohne Phasenversatz angesteuert werden. Eine Kurve 84 repräsentiert einen Ripplestrom in Abhängigkeit des Aussteuerungsgrades einer Maschine mit zwei Teilmaschinen, wobei - wie in Figur 2 dargestellt - eine Teilmaschine linksbündig und die andere Teilmaschine rechtsbündig angesteuert wird, und wobei die PWM-Signale der Teilmaschinen einen Phasenversatz von 50 Prozent der PWM-Periodendauer zueinander aufweisen. Sichtbar ist, dass der Ripplestrom im Zwischenkreis durch voneinander getrennte Schaltvorgänge der Teilmaschinen, bewirkt durch die Ansteuerung gemäß Kurve 84, halbiert werden kann im Vergleich zu der mittenzentrierten Ansteuerung ohne Phasenversatz gemäß Kurve 83.

## Patentansprüche

1. Elektrische Maschine (1) mit einem Stator (2) und einem Rotor (11), wobei die Maschine wenigstens zwei jeweils dieselbe Phasenanzahl aufweisende Teilmaschinen (3, 4) aufweist, wobei die Teilmaschinen jeweils einen Teil von Statorspulen (5, 6, 7, 8, 9, 10) des Stators (2) umfassen und ausgebildet sind, unabhängig voneinander ein magnetisches Drehfeld zum Drehbewegen des Rotors zu erzeugen,
wobei
die Maschine (1) für jede Teilmaschine (3, 4) eine Leistungsendstufe (13, 14) aufweist, und die Maschine (1) wenigstens eine Steuereinheit (17) aufweist, welche mit den Leistungsendstufen (13, 14) verbunden ist, und welche ausgebildet ist, ein PWM-Signal (53, 54) zum Ansteuern der Leistungsendstufen (13, 14) zu erzeugen,
**dadurch gekennzeichnet, dass**
die Steuereinheit (17) ausgebildet ist, das PWM-Signal (53, 54) für die Teilmaschinen (3, 4) derart zu erzeugen, dass die PWM-Pulse (61) für eine Teilmaschine (3) jeweils zu einem Startzeitpunkt (63) einer PWM-Periode (64) beginnen.

2. Elektrische Maschine (1) nach Anspruch 1,
**dadurch gekennzeichnet, dass**
die Steuereinheit (17) ausgebildet ist, die PWM-Pulse (65) für eine weitere Teilmaschine (4) derart zu erzeugen, dass die PWM-Pulse (65) jeweils zu einem Endzeitpunkt (67) der PWM-Periode (66) für die weitere Teilmaschine (4) enden.

3. Elektrische Maschine (1) nach Anspruch 1 oder 2,
**dadurch gekennzeichnet, dass**
die Steuereinheit (17) ausgebildet ist, die PWM-Perioden (64, 66) von zueinander verschiedenen Teilmaschinen zueinander phasenversetzt zu erzeugen.

4. Elektrische Maschine (1) nach einem der vorhergehenden Ansprüche,
**dadurch gekennzeichnet, dass**
die Maschine (1) wenigstens einen mit der Steuereinheit (17) verbundenen Stromsensor (15, 16) aufweist, welcher ausgebildet ist, den Phasenstrom wenigstens einer Phase oder aller Phasen der Teilmaschine (3, 4) zu erfassen, wobei die Steuereinheit (17) ausgebildet ist, den Phasenstrom wenigstens einer Phase der Teilmaschine (3, 4) während einer gemeinsamen Pulspause (36) der PWM-Perioden der Teilmaschinen (3, 4) zu erfassen.

5. Elektrische Maschine (1) nach einem der vorhergehenden Ansprüche,
**dadurch gekennzeichnet, dass**
die Steuereinheit (17) ausgebildet ist, das Tastverhältnis für alle Phasen einer Teilmaschine um ein vorbestimmtes Zeitintervall zu verlängern oder zu verkürzen.

6. Elektrische Maschine (1) nach Anspruch 5,
**dadurch gekennzeichnet, dass**
die Steuereinheit (17) ausgebildet ist, eine Pulsdauer (65, 65') eines High-Side-Pulses und eines Low-Side-Pulses zueinander abwechselnd zu verlängern oder zu verkürzen.

7. Elektrische Maschine (1) nach einem der vorhergehenden Ansprüche,
**dadurch gekennzeichnet, dass**
die Steuereinheit (17) ausgebildet ist, ein Stromerfassungsintervall (40) zu erzeugen und den Strom während des Stromerfassungsintervalls (40) zu erfassen, und das Stromerfassungsintervall (40) während der Dauer einer gemeinsamen Pulspause der Teilmaschinen zu erzeugen.

8. Verfahren zum Ansteuern einer elektrischen Maschine (1) mit wenigstens zwei Teilmaschinen (3, 4), wobei die Teilmaschinen jeweils eine gleiche Anzahl von Statorspulen (5, 6, 7, 8, 9, 10) aufweist, wobei zum Ansteuern der Statorspulen (5, 6, 7, 8, 9, 10) pulsweitenmodulierte Pulsmuster (33, 34) umfassend eine Mehrzahl von PWM-pulsen (61) erzeugt werden, **dadurch gekennzeichnet, dass** die PWM-Pulse (61, 65) für eine Teilmaschine (3, 4) jeweils zu einem Startzeitpunkt (63) einer PWM-Periode (64) beginnen und die PWM-Pulse (65) für eine weitere Teilmaschine (4) jeweils zu einem Endzeitpunkt (67) der PWM-Periode (66) für die weitere Teilmaschine enden.

9. Verfahren nach Anspruch 8,
bei dem ein durch wenigstens eine der Statorspulen (5, 6, 7, 8, 9, 10) fließender Strom während einer gemeinsamen Pulspause der Pulse für die Teilmaschinen Strom innerhalb eines Stromerfassungsintervalls (40) erfasst wird.

10. Verfahren nach einem der Ansprüche 8 oder 9, bei dem die PWM-Perioden (65, 66) der Teilmaschine (3) und der weiteren Teilmaschine (4) jeweils zueinander phasenversetzt sind.

## Claims

1. Electric machine (1) with a stator (2) and a rotor (11), wherein the machine has at least two sub-machines (3, 4) each having the same number of phases, wherein the sub-machines each comprise a portion of stator coils (5, 6, 7, 8, 9, 10) of the stator (2) and are designed to generate, independently of each other, a rotating magnetic field to rotate the rotor,
wherein
the machine (1) has a power output stage (13, 14) for each sub-machine (3, 4), and the machine (1) has at least one control unit (17), which is connected to the power output stages (13, 14), and which is designed to generate a PWM signal (53, 54) to actuate the power output stages (13, 14),
**characterized in that**
the control unit (17) is designed to generate the PWM signal (53, 54) for the sub-machines (3, 4) such that the PWM pulses (61) for a sub-machine (3) each start at a start time (63) of a PWM period (64).

2. Electric machine (1) according to Claim 1,
**characterized in that**
the control unit (17) is designed to generate the PWM pulses (65) for a further sub-machine (4) such that the PWM pulses (65) each end at an end time (67) of the PWM period (66) for the further sub-machine (4).

3. Electric machine (1) according to Claim 1 or 2,
**characterized in that**
the control unit (17) is designed to generate the PWM periods (64, 66) phase-shifted relative to each other for sub-machines differing from each other.

4. Electric machine (1) according to one of the preceding claims,
**characterized in that**
the machine (1) has at least one current sensor (15, 16) connected to the control unit (17), said current sensor being designed to detect the phase current of at least one phase or all phases of the sub-machine (3, 4), wherein the control unit (17) is designed to detect the phase current of at least one phase of the sub-machine (3, 4) during a common pulse pause (36) of the PWM periods of the sub-machines (3, 4).

5. Electric machine (1) according to one of the preceding claims,
**characterized in that**
the control unit (17) is designed to lengthen or to shorten the duty cycle for all phases of a sub-machine by a pre-determined time interval.

6. Electric machine (1) according to Claim 5,
**characterized in that**
the control unit (17) is designed to lengthen or to shorten a pulse duration (65, 65') of a high-side pulse and of a low-side pulse in an alternating manner to each other.

7. Electric machine (1) according to one of the preceding claims,
**characterized in that**
the control unit (17) is designed to generate a current detection interval (40) and to detect the current during the current detection interval (40), and to generate the current detection interval (40) during a common pulse pause of the sub-machines.

8. Method for actuating an electric machine (1) with at least two sub-machines (3, 4), wherein the sub-machines each have the same number of stator coils (5, 6, 7, 8, 9, 10), wherein pulse-width-modulated pulse patterns (33, 34) comprising a plurality of PWM pulses (61) are generated to actuate the stator coils (5, 6, 7, 8, 9, 10), **characterized in that** the PWM pulses (61, 65) for a sub-machine (3, 4) each start at a start time (63) of a PWM period (64) and the PWM pulses (65) for a further sub-machine (4) each end at an end time (67) of the PWM period (66) for the further sub-machine.

9. Method according to Claim 8,
in which a current flowing through at least one of the stator coils (5, 6, 7, 8, 9, 10) is detected current within a current detection interval (40) during a common pulse pause of the pulses for the sub-machines.

10. Method according to either of Claims 8 and 9, in which the PWM periods (65, 66) of the sub-machine (3) and the further sub-machine (4) are each phase-shifted relative to each other.

## Revendications

1. Machine électrique (1) comprenant un stator (2) et un rotor (11), la machine comportant au moins deux sous-machines (3, 4) munies chacune du même nombre de phases, les sous-machines comportant chacune une partie des bobines de stator (5, 6, 7, 8, 9, 10) du stator (2) et étant conçues pour générer indépendamment un champ magnétique tournant destiné à faire tourner le rotor,
la machine (1) comportant pour chaque sous-machine (3, 4) un étage de sortie de puissance (13, 14) et la machine (1) comportant au moins une unité de commande (17) qui est reliée aux étages de sortie de puissance (13, 14) et qui est conçue pour générer un signal PWM (53, 54) destiné à commander les étages de sortie de puissance (13, 14),
**caractérisée en ce que**
l'unité de commande (17) est conçue pour générer le signal PWM (53, 54) destiné aux sous-machines (3, 4) de manière que les impulsions PWM (61) commencent pour une sous-machine (3) à chaque fois à un instant initial (63) d'une période PWM (64).

2. Machine électrique (1) selon la revendication 1, **caractérisée en ce que**
l'unité de commande (17) est conçue pour générer les impulsions PWM (65) destinées à une autre sous-machine (4) de manière que les impulsions PWM (65) se terminent à chaque fois à un instant final (67) de la période PWM (66) pour les autres sous-machines (4).

3. Machine électrique (1) selon la revendication 1 ou 2,
**caractérisée en ce que**
l'unité de commande (17) est conçue pour générer les périodes PWM (64, 66) de sous-machines différentes les unes des autres avec un déphasage les unes par rapport aux autres.

4. Machine électrique (1) selon l'une des revendications précédentes,
**caractérisée en ce que**
la machine (1) comporte au moins un capteur de courant (15, 16) qui est relié à l'unité de commande (17) et qui est conçu pour détecter le courant de phase d'au moins une phase ou de toutes les phases de la sous-machine (3, 4), l'unité de commande (17) étant conçue pour détecter le courant de phase d'au moins une phase de la sous-machine (3, 4) pendant une pause d'impulsion commune (36) des périodes PWM des sous-machines (3, 4).

5. Machine électrique (1) selon l'une des revendications précédentes,
**caractérisée en ce que**
l'unité de commande (17) est conçue pour allonger ou raccourcir, d'un intervalle de temps prédéterminé, le rapport cyclique de toutes les phases d'une sous-machine.

6. Machine électrique (1) selon la revendication 5,
**caractérisée en ce que**
l'unité de commande (17) est conçue pour allonger ou raccourcir alternativement une durée d'impulsion (65, 65') d'une impulsion côté haut et d'une impulsion côté bas l'une par rapport à l'autre.

7. Machine électrique (1) selon l'une des revendications précédentes,
**caractérisée en ce que**
l'unité de commande (17) est conçue pour générer un intervalle de détection de courant (40) et pour détecter le courant pendant l'intervalle de détection de courant (40), et pour générer l'intervalle de détection de courant (40) pendant la durée d'une pause d'impulsion commune des sous-machines.

8. Procédé de commande d'une machine électrique (1) comprenant au moins deux sous-machines (3, 4), les sous-machines comportant chacune le même nombre de bobines de stator (5, 6, 7, 8, 9, 10), des modèles d'impulsions (33, 34) modulées en largeur d'impulsion, qui comprennent une pluralité d'impulsions PWM (61), étant générés pour commander les bobines de stator (5, 6, 7, 8, 9, 10), **caractérisé en ce que** les impulsions PWM (61, 65) destinées à une sous-machine (3, 4) commencent chacune à un instant initial (63) d'une période PWM (64) et les impulsions PWM (65) destinées à une autre sous-machine (4) finissent chacune à un instant final (67) de la période PWM (66) pour les autres sous-machines.

9. Procédé selon la revendication 8,
un courant qui circule à travers l'une au moins des bobines de stator (5, 6, 7, 8, 9, 10) étant détecté à l'intérieur d'un intervalle de détection de courant (40) pendant une pause d'impulsion commune des impulsions destinée aux sous-machines.

10. Procédé selon l'une des revendications 8 ou 9, les périodes PWM (65, 66) de la sous-machine (3) et de l'autre sous-machine (4) étant déphasées l'une par rapport à l'autre.
